# EUROPÄISCHE PATENTSCHRIFT

(11) **EP 0 859 943 B1**
(45) Veröffentlichungstag und Bekanntmachung des Hinweises auf die Patenterteilung: **07.11.2001**
(21) Anmeldenummer: 96924765.9
(22) Anmeldetag: 24.07.1996
(51) Int. Cl.: G01F 1/699, G01D 3/028

(54) **VORRICHTUNG ZUR BESTIMMUNG DES DURCHSATZES EINES STRÖMENDEN MEDIUMS**
DEVICE FOR FINDING THE FLOW RATE OF A FLOWING MEDIUM
DISPOSITIF DE MESURE DU DEBIT D'UN FLUIDE UN ECOULEMENT CONTINU

(30) Priorität: 11.11.1995 DE 19542143
(43) Veröffentlichungstag der Anmeldung: 26.08.1998
(73) Patentinhaber: ROBERT BOSCH GMBH, 70442 Stuttgart (DE)
(72) Erfinder: KLEINHANS, Josef, D-71665 Vaihingen (DE)
(86) Internationale Anmeldenummer: DE9601355
(87) Internationale Veröffentlichungsnummer: WO9718444

(56) Entgegenhaltungen:
- DE-A- 2 806 393
- DE-A- 3 640 242
- DE-A- 4 324 040
- PATENT ABSTRACTS OF JAPAN vol. 006, no. 121 (P-126), 6.Juli 1982 & JP,A,57 048607 (FUJI ELECTRIC CO LTD), 20.März 1982,

## Beschreibung

### Stand der Technik

Die Erfindung geht aus von einer Vorrichtung zur Bestimmung des Durchsatzes eines strömenden Mediums, beispielsweise der angesaugten Luftmasse einer Brennkraftmaschine nach der Gattung des Hauptanspruchs.

Sensoren sowie zugehörige Auswerteschaltungen, mit deren Hilfe der Durchsatz eines strömenden Mediums ermittelt werden kann, sind beispielsweise aus der DE-OS 43 24 040 bekannt. Bei solchen bekannten Massenstromsensoren wird das Sensorelement dem strömenden Medium, beispielsweise dem Luftstrom ausgesetzt. Das Sensorelement umfaßt dabei einen Heizer, der durch Zuführung eines geregelten Stromes auf eine Übertemperatur gegenüber dem zu erfassenden Medium gebracht wird. Diesem Heizer ist ein Heizertemperaturfühler zugeordnet sowie ein Temperaturfühler, der die Temperatur des strömenden Mediums erfaßt. In räumlicher Nähe des Heizers befinden sich zwei temperaturabhängige Widerstände, die bezogen auf die Strömungsrichtung des zu erfassenden Mediums seitlich zum beheizten Widerstand liegen, so daß sie von diesem gleichmäßig erwärmt werden. Vom strömenden Medium werden sie jedoch unterschiedlich stark abgekühlt, da der zuerst angeströmte Widerstand stärker abgekühlt wird als der andere. Die sich daraus ergebende Temperaturdifferenz ergibt bei der vorgeschlagenen Brückenbeschaltung eine Meßspannung an einer Diagonale der Brücke. In Abhängigkeit von dieser Meßspannung wird die Masse des strömenden Mediums ermittelt.

Aus der DE-A-36 40 242 ist eine Auswerteschaltung für einen Sensor bekannt, der ein Ausgangssignal liefert, das außer von der zu erfassenden Größe noch von der Temperatur abhängig ist. Dieser Sensor mißt beispielsweise eine Strömungsgeschwindigkeit. Zur Kompensation der Temperaturabhängigkeit ist eine Widerstandsanordnung in Form einer Brückenschaltung vorgesehen, die wenigstens einen temperaturabhängigen Widerstand umfaßt und eine Brückenspannung liefert, die von der Temperatur abhängig ist. Diese Spannung wird der Meßspannung zur Kompensation der Temperaturabhängigkeit überlagert.

### Vorteile der Erfindung

Die erfindungsgemäße Vorrichtung zur Bestimmung des Durchsatzes eines strömenden Mediums mit den Merkmalen des Hauptanspruchs hat gegenüber der bekannten Vorrichtung den Vorteil, daß eine weitere Verbesserung des Temperaturverhaltens erzielt wird. Dies gilt insbesonders bezüglich des Hochtemperaturverhaltens der beanspruchten Vorrichtung. Erzielt wird dieser Vorteil, indem die bekannte Schaltungsanordnung durch eine zusätzliche Wiederstandsbrückenschaltung ergänzt wird, wobei diese zusätzlichen Widerstandsbrückenschaltung einen Hochtemperaturabgleich ermöglicht.

Weitere Vorteile der Erfindung werden durch die in den Unteransprüchen angegebenen Maßnahmen erzielt.

### Zeichnung

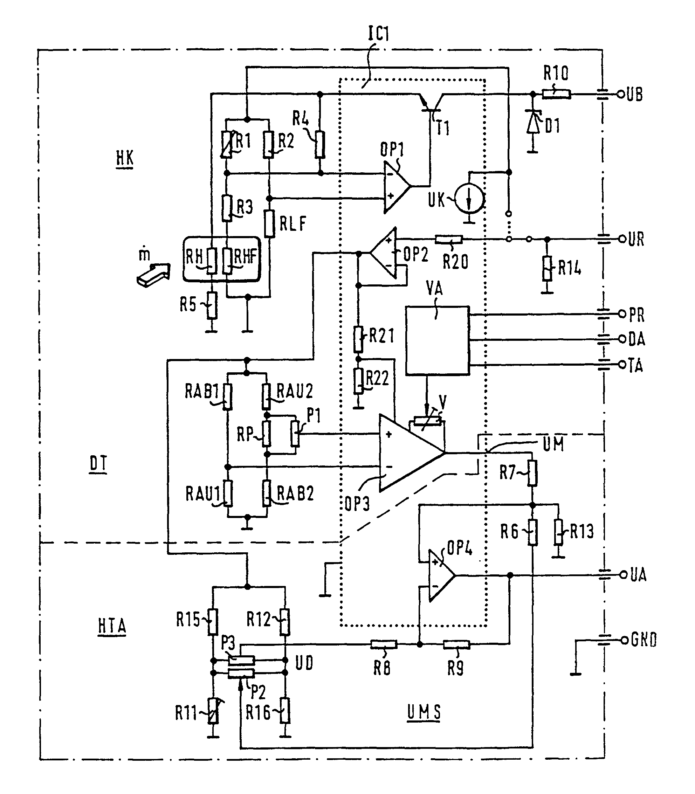

Ein Ausführungsbeispiel die Erfindung ist in der Zeichnung dargestellt und wird in der nachfolgenden Beschreibung näher erläutert. Die einzige Figur zeigt dabei die gesamte Beschaltung der erfindungsgemäßen Vorrichtung mit einem Heizregelkreis und einer sog. ΔT-Brückenschaltung wie sie zumindest teilweise aus der DE-OS 43 24 040 bekannt sind. Weiterhin umfaßt die Schaltung nach der Figur auch die zusätzliche Hochtemperatur-Abgleichsstufe.

### Beschreibung des Ausführungsbeispiels

In der Figur ist eine erfindungsgemäße Vorrichtung zur Bestimmung des Durchsatzes eines strömenden Mediums dargestellt, wobei sich die gesamte Anordnung auf einem Substrat 10 befindet und in geeigneter Weise dem zu ermittelnden Medium, beispielsweise dem Luftstrom im Ansaugrohr einer Brennkraftmaschine ausgesetzt wird.

Der Heizregelkreis HK umfaßt eine Brückenschaltung mit den Widerständen R1, R2, R3, RHF sowie RLF, wobei RHF der Heizertemperaturfühler und RLF der Luft- bzw. Medientemperaturfühler ist und der Wert dieser Widerstände temperaturabhängig ist. Die Widerstandsbrücke des Heizregelkreises HK liegt zwischen einer Spannung UK und Masse.

Die Heizung erfolgt mit Hilfe des Heizwiderstandes RH, der über die Kollektor-Emitter-Strecke eines Transistors T1 sowie über einen Widerstand R10 an der Batteriespannung UB liegt, wobei zur Spannungsstabilisierung zusätzlich eine Zehnerdiode D1 zwischen dem Widerstand R10 und Masse geschaltet ist. Die andere Seite des Heizwiderstandes RH ist über einen Widerstand R5 mit Masse verbunden.

Die zweite Diagonale der Brückenschaltung des Heizregelkreises ist mit den beiden Eingängen eines Operationsverstärkers OP1 verbunden, dessen Ausgang auf die Basis des Transistors T1 führt. Zwischen dem invertierenden Eingang des Operationsverstärkers OP1 und dem Heizwiderstand RH bzw. dem Emitter des Transistors T1 liegt ein weiterer Widerstand R4.

Die eigentliche Meßschaltung ist eine als Temperaturdifferenzbrücke (ΔT-Brückenschaltung) DT bezeichnete Widerstandsbrückenschaltung mit den Widerständen RAB1, RAB2, RAU1, RAU2 sowie RP. Diese Widerstände sind temperaturabhängige Widerstände, die sich ebenso wie der Heizwiderstand RH sowie der Heizertemperaturfühler RHF auf Übertemperatur gegenüber der Medientemperatur befinden. Die Wiederstände RAB1 und RAB2 sind dabei bezogen auf die Strömungsrichtung des zu erfassenden Mediums abwärts vom Heizwiderstand angeordnet, die Widerstände RAU1 sowie RAU2 dagegen aufwärts.

Die Widerstandsbrücke des ΔT-Schaltkreises DT liegt mit einer Diagonalen am Ausgang eines Operationsverstärkers OP2, dessen nichtinvertierendem Eingang über einen Widerstand R20 eine Referenzspannung UR zugeführt wird, zwischen dem Widerstand R20 und Masse liegt noch ein Wiederstand R14. Die andere Seite der erwähnten Brückendiagonale liegt ebenfalls auf Masse.

Die Spannung, die sich an der anderen Brückendiagonale einstellt wird mit Hilfe eines Potentiometers P1, das parallel zum Widerstand RP liegt, ausgekoppelt. Der Schleiferanschluß des Potentiometers P1 führt auf den nichtinvertierenden Eingang eines Verstärkers OP3, dessen invertierender Eingang mit dem Verbindungspunkt zwischen Widerständen RAB1 und RAU1 angeschlossen ist. Der Verstärker OP3 ist ein Vertärker mit einstellbarer Verstärkung. Der digitale Verstärkungsabgleich wird mit Hilfe des Schaltungsblocks VA durchgeführt, der drei Anschlüsse PR, DA, TA aufweist, über die von einer externen Auswerteeinrichtung die erforderlichen Ansteuersignale zugeführt werden.

Der Verstärker OP3 ist im übrigen noch über einen Spannungsteiler R21, R22 mit dem Ausgang sowie dem invertierenden Eingang des Operationsverstärkers OP2 verbunden. Der Ausgang des Verstärkers OP3, an dem die Meßspannung UM abgreifbar ist führt auf eine Widerstandskombination R7, R6, R13 die Bestandteil der noch zu beschreibenden Umsetzschaltung UMS ist.

Die Umsetzschaltung UMS umfaßt neben den bereits erwähnten Widerständen einen Operationsverstärker OP4, dessen nicht invertierender Eingang mit dem Verbindungspunkt zwischen den Widerständen R6, R7, R13 verbunden ist und dessen Ausgang über einen Widerstand R9 mit dem invertierenden Eingang in Verbindung steht. Am Ausgang des Operationsverstärkers OP4 entsteht die Ausgangsspannung UA, die zur Bestimmung der Masse des strömenden Mediums herangezogen wird, mit Hilfe der Umsetzschaltung UMS, die über den Widerstand R8 auf die Hochtemperatur-Abgleichstufe HTA führt, wird die in der Hochtemperatur-Abgleichstufe erzeugte Abgleichsspannung mit der Spannung UM, die von der Meßbrücke geliefert wird, überlagert. Die Hochtemperatur-Abgleichsstufe HTA umfaßt die Widerstände R11, R12 sowie die temperaturabhängigen Widerstände R15, R16, die als Brücke verschaltet sind und einerseits mit dem Ausgang des Operationsverstärkers OP2 sowie dem entsprechendem Anschluß der DT-Brücke in Verbindung stehen, während die andere Seite der Brücke auf Masse liegt.

In der anderen Brückendiagonale liegen zwei Potentiometer P2, P3, wobei ein Potentiometeranschluß fest ist und der andere einstellbar. Der feste Anschluß des Potentiometers P3 führt über den Widerstand R8 zur Umsetzschaltung UMS. Der variable Schleiferanschluß des Potentiometers P2 führt über die Widerstände R6, R7 der Umsetzschaltung UMS zum Ausgang des Operationsverstärkers OP3, an dem die Meßspannung UM liegt.

Von der in der Figur dargestellten Gesamtanordnung sind die Hochtemperaturabgleichsstufe HTA sowie die Umsetzschaltung die wesentlichen Bestandteile der vorliegenden Erfindung, während der Heizregelkreis HK sowie die DT-Brücke im wesentlichen bereits aus der DE-OS 43 24 040 bekannt sind.

Zur Beschreibung der Funktionsweise der gesamten Vorrichtung soll zunächst auf die Funktionsweise des Heizregelkreises HK sowie der DT-Brücke eingegangen werden, danach wird die Funktionsweise der HTA-Abgleichsstufe sowie der Umsetzschaltung UMS beschrieben.

Der Widerstand RH, also der Heizwiderstand, der Widerstand RHF, der die Temperatur des Heizwiderstandes ermitteln soll sowie die Widerstände RAU und RAB, die beim Ausführungsbeispiel als getrennte Widerstände RAU1, RAU2, RAB1, RAB2 ausgebildet sind, sind auf dem Substrat S, beispielsweise einer Membran angeordnet. Der Heizwiderstand RH wird dabei vollständig vom Widerstand RHF umgeben, die Widerstände RAU und RAB bzw. RAU1, RAU2 und RAB1, RAB2 sind jeweils seitlich vom Widerstand RH und RHF angeordnet. Die Anströmung des Mediums, die in der Figur durch einen Pfeil sowie die Bezeichnung m angedeutet ist, erfolgt derart, daß die Strömung zunächst über den Widerstand RAU bzw. RAU1, RAU2 und dann über den Widerstand RH und dann über den Widerstand RAB bzw. RAB1, RAB2 strömt. Dadurch wird der Widerstand RAU stärker abgekühlt als der Widerstand RAB. Die unterschiedliche Abkühlung wird zur Ermittlung des strömenden Mediums ausgewertet.

Der Widerstand RHF, der die Temperatur des Substrats bzw. der Membran in der Nähe des Heizwiderstandes RH mißt ist wie in der Figur dargestellt ist, in einer Brückenschaltung angeordnet. Der Brückenzweig, in dem der Widerstand RHF angeordnet ist, ist mit dem invertierenden Eingang des Operationsverstärkers OP1 verbunden. Die Ausgangsspannung des Operationsverstärkers OP1 wirkt auf die Basis des Transistors T1 derart, daß eine Rückkopplung auf den Heizwiderstand RH so erfolgt, daß eine Erwärmung des Widerstandes RHF zu einer Verringerung des Stromflusses auf den Widerstand RH führt.

Im anderen Brückenzweig ist der Widerstand RLF angeordnet, dessen Widerstand von der Lufttemperatur abhängt. Da dieser Widerstandszweig auf den nichtinvertierenden Eingang des Operationsverstärkers OP1 wirkt, wird der Stromfluß durch den Heizwiderstand RH bei steigender Temperatur der Luft bzw. des strömenden Mediums allgemein erhöht. Die beiden Brückenzweige wirken somit derart auf den Heizwiderstand, daß gegenüber der Lufttemperatur eine bestimmte Übertemperatur, also eine bestimmte Temperaturdifferenz zwischen Lufttemperatur und Heizertemperatur eingestellt wird.

Durch geeignete Wahl der Widerstände R1 und R3, die ebenfalls in den Brückenzweig angeordnet sind, der auf den invertierenden Operationsverstärkereingang zurückwirkt kann eine zusätzliche Temperaturabhängigkeit der Übertemperatur erzeugt werden. Es ist dann die Übertemperatur des Heizwiderstandes RH gegenüber der Lufttemperatur nicht konstant sondern eine Funktion der Lufttemperatur. Die Widerstände R1 und R3 sind dabei beispielsweise als Platinwiderstände auszugestalten, deren Widerstand sich aufgrund der Luft- bzw. Medientemperatur ändert. Diese zusätzliche Abhängigkeit der Temperatur des Heizwiderstandes von der Umgebungstemperatur kann zur Kompensation sekundärer Effekte wie beispielsweise der Temperaturabhängigkeit der Wärmeleitfähigkeit, der Dichte oder ähnlicher Effekte genutzt werden. Durch eine entsprechende Wahl der Widerstandswerte der Widerstände R1, R3, RHF kann so eine besonders lineare Ausgangskennlinie des Sensors erzielt werden.

Zur Auswertung des Massenflusses sind die beiden Widerstände RAU (aufwärts) und RAB (abwärts) bzw. bei der in der Figur dargestellten Anordnung RAU1, RAU2 sowie RAB1, RAB2 vorgesehen. Wenn keine Strömung auf der Oberseite des Substrats entlangstreicht, werden die Widerstände RAB und RAU vom Heizwiderstand RH gleichmäßig erwärmt. Bei einer Strömung auf der Oberseite des Substrats wird der aufwärts gelegene Widerstand bzw. die aufwärts gelegenen Widerstände RAU1, RAU2 stärker abgekühlt als der oder die abwärts gelegenen Widerstände RAB bzw RAB1, RAB2. Es ist sogar möglich, daß die Temperatur des abwärts gelegenen Widerstandes RAB durch eine Strömung erhöht wird, da die Strömung Wärme vom Heizwiderstand RH zum abwärts gelegenen Widerstand transportiert.

Die Widerstände RAU1 und RAB1 sowie RAU2 und RAB2 sind in einer Brückenschaltung angeordnet, die mit Hilfe des Widerstandes RP sowie des parallel geschalteten Potentiometers P1, das vom Operationsverstärker OP3 angesteuert wird, abgeglichen wird. Da das Widerstandsverhältnis des Potentiometers P1 durch externe Beeinflussung des Operationsverstärkers OP3 jederzeit und von außen geändert werden kann, ist ein optimaler Ausgleich möglich. Die Beeinflussung des Verstärkers OP3 erfolgt über eine Abgleichstufe VA, mit der ein digitaler Verstärkungsabgleich durchführbar ist. Der Abgleichstufe VA werden dazu Signale über die Eingänge PR (Programm) und DA (Daten) zugeführt, über TA gelangen Taktsignale zu VA.

Zur weiteren Verbesserung der Eigenschaften der bisher beschriebenen Schaltungsanordnung wird die Hochtemperatur-Abgleichsstufe HTA eingeführt. Hauptbestandteil für den Hochtemperaturabgleich ist die Widerstandsbrückenschaltung mit den Widerständen R11, R12, R15, R16 von der die Widerstände R15 und R16 eine beispielsweise gleiche Temperaturabhängigkeit aufweisen. Bei Raumtemperatur soll dabei gelten, daß das Widerstandsverhältnis R11/R15 gleich R12/R16 ist. Die Diagonalspannung der Brücke ist damit bei Raumtemperatur gleich Null Millivolt.

Aufgrund der Temperaturabhängigkeit der Widerstände R15 und R16 entsteht bei anderen Temperaturen eine Diagonalspannung UD, die ungleich Null und proportional zur Temperatur ist.

Die beiden Potentiometer P2 und P3 der Hochtemperatur-Abgleichsstufe HTA sind im Querzweig der Widerstandsbrücke angeordnet. P3 ist dabei fest auf Mittelstellung eingestellt, d. h. der Potentiometerwiderstand links und rechts des Schleifers ist identisch.

Beim Potentiometer P2 ist die Schleiferstellung variabel. Mit diesem Potentiometer P2 läßt sich der Anteil der zur Kompensation des Temperaturfehlers benötigt wird einstellen. Diese Einstellung erfolgt ausgehend von der Ausgangsspannung UM am Operationsverstärker OP3. Bei optimaler Entkopplung von den Widerständen R8 und R6 läßt sich eine temperaturabhängige Spannung kreieren, wobei der Abgleich bei hoher Temperatur den Abgleich bei Raumtemperatur nicht beeinflußt, wenn wie bereits erwähnt gilt:
R11/R15 = R12/R16 unter der Voraussetzung, daß Raumtemperatur herrscht. Die Entkopplung von den Widerständen R8 und R6 läßt sich im übrigen ralisieren, indem hochohmige Widerstände R8, R6 eingesetzt werden oder eine Spannungsfolgerschaltung eingesetzt wird.

Mit der Hochtemperaturabgleichsstufe läßt sich insbesonders bei geringen Strömungen der Einfluß der Medientemperatur auf das Meßergebnis minimal halten. Es ist dabei nicht erforderlich, daß die Temperatur beim Hochtemperaturabgleich konstant ist, es ist lediglich erforderlich, daß ein genügender Temperaturhub im Vergleich zur Raumtemperatur vorliegt. Die in der Figur dargestellte Schaltungsanordnung, insbesonders im Bereich des Heizregelkreises HK oder der Temperaturdifferenzbrücke DT ist beispielshaft angegeben, es sind andere, ähnlich wirkende Schaltungsanordnungen möglich. Wie bereits erwähnt können beispielsweise die Widerstände RAB1 und RAB2 sowie die Widerstände RAU1 und RAU2 zu je einem Widerstand zusammengefaßt werden. Es ist weiterhin möglich, zusätzlich zum Heizertemperaturfühler RHF, Kompensationswiderstände in Serie zu schalten, wobei diese jeweils vor und nach dem Brückenquerzweig liegen können.

In der DT-Brückenschaltung kann beispielsweise der Widerstand RP entfallen und lediglich ein Potentiometer P1 ersetzt werden. Der mit IC1 bezeichnete Teil der gesamten Anordnung ist beispielsweise ein Hybridschaltkreis der eine Vielzahl von Operationensverstärkern, Stromquellen sowie Transistoren umfaßt sowie eine Anzahl von Hybridwiderständen mit wählbaren Temperaturkoeffizienten.

Die gesamte in der Figur dargestellte Anordnung kann auf einem Chip integriert sein, mit Anschlüssen, an denen folgende Größen zugeführt bzw. abgenommen werden:
- UB:: Batteriespannung
- UR:: Referenzspannung
- PR:: Programm für Verstärkungsregelung
- DA:: Dateneingang
- TA:: Takfrequenz
- UA:: Ausgangsspannung
- GND:: Masse-(Ground)Anschluß

## Patentansprüche

1. Vorrichtung zur Bestimmung des Durchsatzes eines strömenden Mediums mit einem, dem strömenden Medium aussetzbaren Substrat, auf dem eine erste Widerstandsanordnung (RH, RHF), die Bestandteil eines Heizregelkreises (HK) ist, angeordnet ist, mit wenigstens einem auf eine vorgebbare Übertemperatur heizbaren Widerstand (RH) und mit einer zweiten Widerstandsanordnung (DT), die als eine mit einer Diagonalen zwischen einer Versorgungsspannung und Masse liegende Brücke beschaltet ist und wenigstens zwei temperaturabhängige Widerstände (RAB1, RAB2, RAU1, RAU2) umfaßt, die bezogen auf die Strömungsrichtung des zu erfassenden Mediums oberhalb und unterhalb des Heizwiderstandes (RH) angeordnet sind, so daß sie von diesem gleichmäßig erhitzt werden, während sie vom ströhmenden Medium unterschiedlich stark abgekühlt werden, wobei die sich in Folge des Temperaturunterschiedes einstellende Meßspannnung (UM) an der anderen Brückendiagonale zur Bestimmung des Durchsatzes ausgewertet wird, **dadurch gekennzeichnet, daß** eine dritte Widerstandsanordnung (HTA) vorhanden ist, die temperaturabhängige Widerstände (R15, R16) in einer Brückenschaltung und wenigstens zwei Potentiometer (P2, P3), die im Querzweig der Brücke liegen, umfaßt und eine Diagonalspannung (UD) erzeugt, die von der Temperatur abhängig ist und der Meßspannung (UM) überlagert wird.

2. Vorrichtung nach Anspruch 1, **dadurch gekennzeichnet, daß** eines der Potentiometer (P3) der dritten Widerstandsanordnung fest eingestellt ist und das andere (P2) variabel ist.

3. Vorrichtung nach Anspruch 2, **dadurch gekennzeichnet, daß** das variabel einstellbare Potentiometer (P2) in Abhängigkeit von der Meßspannung (UM) veränderbar ist, wobei die Einstellung des Widerstandsverhältnisses des Potentiometers in Abhängigkeit vom Ausgangsignal (UM) des Operationsverstärkers (OP3), das die Meßspannung (UM) darstellt, erfolgt.

4. Vorrichtung nach einem der vorhergehenden Ansprüche, **dadurch gekennzeichnet, daß** die Diagonalspannung (UD) der dritten Widerstandsanordnung und die Meßspannung (UM) in einer Umsetzschaltung (UMS) überlagert werden, zur Erzeugung des temperaturkompensierten Ausgangssignals (UA).

5. Vorrichtung nach einem der vorhergehenden Ansprüche, **dadurch gekennzeichnet, daß** die Widerstände (R11, R12, R15, R16) der dritten Widerstandsanordnung (HTA) so gewählt werden, daß bei Raumtemperatur gilt: R11/R15 = R12/R16.

6. Vorrichtung nach den Ansprüchen 2 bis 5, **dadurch gekennzeichnet, daß** die Einstellung des variablen Potentiometers (P2) so erfolgt, daß eine optimale Kompensation des Temperaturfehlers bei höheren Temperaturen erfolgt.

7. Vorrichtung nach einem der vorhergehenden Ansprüche, **dadurch gekennzeichnet, daß** die Widerstände (R6) und (R8), die mit den Potentiometern (P2) und (P3) in Verbindung stehen, hochohmig sind oder daß ein Operationsverstärker (OP4), dessen invertierender Eingang am Widerstand (R8) und dessen nichtinvertierender Eingang am Widerstand (R6) angeschlossen ist, als Spannungsfolger beschaltet ist.

## Claims

1. Device for determining the flow rate of a flowing medium, having a substrate which can be exposed to the flowing medium and on which there is arranged a first resistor arrangement (RH, RHF) which is a constituent of a heating control loop (HK), having at least one resistor (RH) which can be heated to a prescribable overtemperature, and having a second resistor arrangement (DT), which is connected as a bridge situated with a diagonal between a supply voltage and frame, and comprises at least two temperature-dependent resistors (RAB1, RAB2, RAU1, RAU2) which are arranged upstream and downstream of the heating resistor (RH) with reference to the flow direction of the medium to be measured, such that they are simultaneously heated by the said heating resistor, whereas they are cooled with different intensity by the flowing medium, the measuring voltage (UM) set up as a consequence of the temperature difference being evaluated at the other bridge diagonal in order to determine the flow rate, **characterized in that** there is present a third resistor arrangement (HTA), which comprises temperature-dependent resistors (R15, R16) in a bridge circuit and at least two potentiometers (P2, P3) which are situated in the transverse arm of the bridge, and generates a diagonal voltage (UD) which is a function of temperature and is superimposed on the measuring voltage (UM).

2. Device according to Claim 1, **characterized in that** one of the potentiometers (P3) of the third resistor arrangement is permanently set, and the other (P2) is variable.

3. Device according to Claim 2, **characterized in that** the variably settable potentiometer (P2) can be varied as a function of the measuring voltage (UM), the setting of the resistance ratio of the potentiometer being performed as a function of the output signal (UM) of the operational amplifier (OP3), which represents the measuring voltage.

4. Device according to one of the preceding claims, **characterized in that** the diagonal voltage (UD) of the third resistor arrangement and the measuring voltage (UM) are superimposed in a conversion circuit (UMS) in order to generate the temperature-compensated output signal (UA).

5. Device according to one of the preceding claims, **characterized in that** the resistors (R11, R12, R15, R16) of the third resistor arrangement (HTA) are selected so that R11/R15 = R12/R16 holds at room temperature.

6. Device according to Claims 2 to 5,
**characterized in that** the setting of the variable potentiometer (P2) is performed such that there is an optimum compensation of the temperature error at higher temperatures.

7. Device according to one of the preceding claims, **characterized in that** the resistors (R6) and (R8), which are connected to the potentiometers (P2) and (P3), are of high resistance, or **in that** an operational amplifier (OP4) whose inverting input is connected to the resistor (R8) and whose non-inverting input is connected to the resistor (R6) is connected as voltage follower.

## Revendications

1. Dispositif pour déterminer le débit d'un fluide, comprenant un substrat exposé au fluide en circulation, ayant un premier dispositif à résistances (RH, RHF) faisant partie d'un circuit de régulation de chauffage (HK), au moins une résistance (RH) qui peut être chauffée à une surtempérature prédéterminée, et un second dispositif à résistances (DT) branchées en pont avec une diagonale placée entre la tension d'alimentation et la masse et au moins deux résistances dépendant de la température (RAB1, RAB2, RAU1, RAU2) qui sont installées en amont et en aval de la résistance chauffante (RH) par rapport à la direction de circulation du fluide, ces résistances étant chauffées régulièrement alors qu'elles sont refroidies différemment par le fluide qui circule,
la tension de mesure (UM) qui s'établit du fait de la différence de température sur l'autre diagonale du pont, étant exploitée pour déterminer le débit,
**caractérisé en ce qu'**
il comporte un troisième dispositif à résistances (UTA) comprenant des résistances dépendant de la températures (R15, R16) dans un montage en pont, et au moins deux potentiomètres (P2, P3) dans la branche transversale du pont pour créer une tension (UD) sur la diagonale, cette tension dépendant de la température et se combinant à la tension de mesure (UM).

2. Dispositif selon la revendication 1,
**caractérisé en ce que**
l'un des potentiomètres (P3) du troisième dispositif à résistances est réglé de manière fixe et l'autre (P2) est variable.

3. Dispositif selon la revendication 2,
**caractérisé en ce que**
le potentiomètre réglable de manière variable (P2) est modifié en fonction de la tension de mesure (UM), le réglage des rapports des résistances du potentiomètre se faisant en fonction du signal de sortie (UM) de l'amplificateur opérationnel (OP3) qui représente la tension de mesure (UM).

4. Dispositif selon l'une des revendications précédentes,
**caractérisé en ce que**
la tension aux bornes de la diagonale (UD) du troisième dispositif à résistances et la tension de mesure (UM) sont combinées dans un circuit de conversion (UMS) pour générer le signal de sortie compensé en température (UA).

5. Dispositif selon l'une des revendications précédentes,
**caractérisé en ce que**
les résistances (R11, R12, 15, 16) du troisième dispositif à résistances (HTA) sont choisies pour avoir, à la température ambiante, la relation R11/R15 = R12/R16.

6. Dispositif selon l'une quelconque des revendications 2 à 5,
**caractérisé en ce que**
le réglage du potentiomètre variable (P2) se fait pour avoir une compensation optimale de l'erreur de température aux températures élevées.

7. Dispositif selon l'une des revendications précédentes,
**caractérisé en ce que**
les résistances (R6, R8) en relation avec les potentiomètres (P2, P3) sont des résistances fortement ohmiques, et un amplificateur opérationnel (OP4) dont l'entrée inverseuse est reliée à la résistance (R8) et l'entrée non inverseuse à la résistance (R6), est branchée comme suiveur de tension.
